# EUROPÄISCHE PATENTSCHRIFT

(11) **EP 3 522 723 B1**
(45) Veröffentlichungstag und Bekanntmachung des Hinweises auf die Patenterteilung: **10.03.2021**
(21) Anmeldenummer: 17784598.9
(22) Anmeldetag: 04.10.2017
(51) Int. Cl.: A21B 5/02, A21B 1/48, A21B 1/28

(54) **BACKOFEN MIT MODULAREM HEIZELEMENT**
OVEN WITH MODULAR HEATING ELEMENT
FOUR À ÉLÉMENT CHAUFFANT MODULAIRE

(30) Priorität: 04.10.2016 EP 16192158
(43) Veröffentlichungstag der Anmeldung: 14.08.2019
(73) Patentinhaber: Haas Food Equipment GmbH, 2100 Leobendorf (AT)
(72) Erfinder: JIRASCHEK, Stefan, 2202 Königsbrunn (AT); SCHELLER, Markus, 2004 Bruderndorf (AT); SÜSS, Daniel, 3430 Tulln an derDonau (AT); MILLER, Karl, 1100 Wien (AT)
(74) Vertreter: Puchberger & Partner Patentanwälte
(86) Internationale Anmeldenummer: PCT/EP2017/075103
(87) Internationale Veröffentlichungsnummer: WO 2018/065431

(56) Entgegenhaltungen:
- EP-A2- 1 452 094
- WO-A1-2012/161326
- WO-A1-2014/111511
- JP-A- 2000 236 799
- US-A- 4 120 646

## Beschreibung

Die Erfindung betrifft einen Backofen gemäß Oberbegriff des unabhängigen Patentanspruchs. Insbesondere betrifft die Erfindung einen Backofen zum Herstellen gebackener, bevorzugt essbarer, Produkte, umfassend mehrere, in einem langgestreckten Maschinengestell entlang einem Endlosförderer vorgesehene öffenbare und schließbare Backzangen, wobei die Backzangen aneinandergereiht jeweils nacheinander einen Backmassenauftragsbereich zum Auftragen einer Backmasse auf eine geöffnete Backzange, einen Schließbereich zum Schließen der Backzangen, einen über eine Heizanordnung beheizten Backraum zum Backen der Backprodukte in den geschlossenen Backzangen, einen Öffenbereich zum Öffnen der Backzangen, und einen Backproduktentnahmebereich zur Entnahme der gebackenen Produkte aus den geöffneten Backzangen durchlaufen.

Derartige Backöfen dienen insbesondere zur Herstellung von Waffelprodukten, wie beispielsweise Flachwaffeln oder Hohlwaffeln.

Gattungsähnliche Backöfen sind in unterschiedlichen Ausführungsformen bekannt und publiziert. Unter anderem sind herkömmliche Vorrichtungen aus der WO 2014/111511 A1, der US 4 120 646 A, der EP 1 452 094 A2, der WO 2012/161326 A1 und der JP 2000 236 799 A bekannt.

Beispielsweise sind Backöfen bekannt, bei denen die Beheizung des Backraums über Gasbrenner erfolgt, die dem Endlosförderer folgend, entlang des gesamten Backraums angeordnet sind. Ferner sind Backöfen bekannt, bei denen die Heizanordnung als Strahlungsbrenner ausgebildete Heizelemente umfasst, um die Backzangen zu beheizen. Diese Heizelemente können, je nach Ausgestaltung, eine derart hohe Heizleistung aufweisen, dass eine Beheizung entlang des gesamten Verlaufs des Endlosförderers nicht notwendig ist. Vielmehr reicht es aus, diese Strahlungsbrenner abschnittsweise entlang des Endlosförderers vorzusehen.

Jedoch sind auch Backöfen mit herkömmlichen Gasbrennern bekannt, bei denen sich die Gasbrenner nur über einen Abschnitt des Backraums erstrecken.

Bei derartigen Öfen wurde überraschend festgestellt, dass die Lage der Heizelemente einen Einfluss auf das herzustellende Backprodukt hat. So kann es beispielsweise notwendig sein, für unterschiedliche in einem Backofen gefertigte Backprodukte, die Lage der Heizelemente zu variieren oder anzupassen.

Ferner besteht eine Nachfrage nach Backöfen, die einfach zu warten sind. Insbesondere die Wartung der Gasbrenner ist bei herkömmlichen Backöfen zeitintensiv, da die Brenneranordnungen meist über Schraubverbindungen fest mit dem Maschinengestell verbunden sind. Um einen derartigen Gasbrenner ausbauen oder warten zu können, muss in einem ersten Schritt die Produktion angehalten werden. In weiterer Folge muss gewartet werden, bis der Gasbrenner und insbesondere der gesamte Backofen ausgekühlt ist. Erst dann können die Gasbrenner entnommen, repariert oder gewartet werden.

Aufgabe der Erfindung ist es nun, die Nachteile des Standes der Technik zu überwinden und insbesondere einen Backofen zu schaffen, der eine flexible Handhabbarkeit der Heizelemente ermöglicht.

Die erfindungsgemäße Aufgabe wird durch die Merkmale des unabhängigen Patentanspruchs gelöst.

Erfindungsgemäß betrifft die Erfindung einen Backofen nach dem Anspruch 1 zum Herstellen gebackener, bevorzugt essbarer, Produkte, umfassend mehrere in einem langgestreckten Maschinengestell entlang einem Endlosförderer vorgesehene öffenbare und schließbare Backzangen, die aneinandergereiht jeweils nacheinander:
- einen Backmassenauftragsbereich zum Auftrag einer Backmasse auf eine geöffnete Backzange,
- einen Schließbereich zum Schließen der Backzangen,
- einen Backraum zum Backen der Backprodukte in den geschlossenen Backzangen, in dem mindestens eine Heizanordnung zur Beheizung der im Backraum befindlichen Backzangen vorgesehen ist,
- einen Öffenbereich zum Öffnen der Backzangen
- und einen Backproduktentnahmebereich zur Entnahme der gebackenen Produkte aus den geöffneten Backzangen durchlaufen,
wobei die Heizanordnung mindestens ein beheizbares oder beheiztes Heizelement zur Zuführung von Wärmeenergie in den Backraum umfasst.

Erfindungsgemäß ist vorgesehen, dass mindestens eine obenliegende Heizelementaufnahme vorgesehen ist, an der das Heizelement über eine Verbindungsvorrichtung lösbar mit dem Maschinengestell verbunden ist, dass der Backraum von einem Gehäuse umgeben ist, dass das Gehäuse im Bereich der obenliegenden Heizelementaufnahme eine mit einem entfernbaren Deckel verschlossene Öffnung aufweist, und dass die Öffnung zumindest teilweise von dem Heizelement abgedeckt ist.

Gegebenenfalls kann vorgesehen sein, dass die Verbindungsvorrichtung mindestens ein mit dem Maschinenrahmen verbundenes Auflager zur vertikalen Abstützung des Heizelements umfasst.

Gegebenenfalls kann vorgesehen sein, dass die Verbindungsvorrichtung mindestens ein Lagezentriermittel zur horizontalen Lagezentrierung des Heizelements gegenüber dem Maschinengestell umfasst.

Gegebenenfalls kann vorgesehen sein, dass das Heizelement am entfernbaren Deckel angebracht ist oder dass der entfernbare Deckel zumindest teilweise durch das Heizelement gebildet ist.

Gegebenenfalls kann vorgesehen sein, dass das Heizelement am entfernbaren Deckel angebracht ist oder dass der entfernbare Deckel zumindest teilweise durch das Heizelement gebildet ist, und dass der Deckel über die Verbindungsvorrichtung mit dem Maschinengestell und/oder dem Gehäuse lösbar verbunden ist.

Gegebenenfalls kann vorgesehen sein, dass mehrere obenliegende Heizelementaufnahmen vorgesehen sind, dass das Gehäuse im Bereich der obenliegenden Heizelementaufnahmen eine oder mehrere mit einem entfernbaren Deckel oder mit mehreren entfernbaren Deckeln verschlossene oder verschließbare Öffnung oder Öffnungen aufweist, und dass das Heizelement wahlweise über die Verbindungsvorrichtung an einer der obenliegenden Heizelementaufnahmen mit dem Maschinengestell verbunden oder verbindbar ist.

Gegebenenfalls kann vorgesehen sein, dass die Heizanordnung mehrere Heizelemente umfasst, dass mehrere Heizelementaufnahmen vorgesehen sind, und dass die Heizelemente über Verbindungsvorrichtungen lösbar mit dem Maschinengestell verbunden sind.

Gegebenenfalls kann vorgesehen sein, dass die obere Heizelementaufnahme oder die oberen Heizelementaufnahmen oberhalb des Endlosförderers angeordnet ist oder sind.

Gegebenenfalls kann vorgesehen sein, dass der Backofen eine zweite Heizelementaufnahme und gegebenenfalls mindestens eine weitere Heizelementaufnahme umfasst, und dass das Heizelement über eine oder die Verbindungsvorrichtung wahlweise an der ersten Heizelementaufnahme, an der zweiten Heizelementaufnahme oder gegebenenfalls an der mindestens einen weiteren Heizelementaufnahme mit dem Maschinengestell verbindbar ist.

Gegebenenfalls kann vorgesehen sein, dass das Heizelement als gasbetriebener Strahlungsbrenner ausgebildet ist, oder dass die Heizelemente als gasbetriebene Strahlungsbrenner ausgebildet sind, und insbesondere dass das Heizelement oder die Heizelemente als nach unten gerichtete gasbetriebene Strahlungsbrenner ausgebildet ist oder sind.

Gegebenenfalls kann vorgesehen sein, dass der Backofen eine erste untere Heizelementaufnahme umfasst, an der ein unteres Heizelement über eine Führungsvorrichtung lösbar mit dem Maschinengestell verbunden ist, wobei die Führungsvorrichtung mindestens eine Führungsschiene und mindestens ein entlang der Führungsschiene bewegbares Führungselement aufweist.

Gegebenenfalls kann vorgesehen sein, dass die Führungsvorrichtung als Auszug zur geführten Einführung und Entnahme des unteren Heizelements in den Backofen oder aus dem Backofen ist.

Gegebenenfalls kann vorgesehen sein, dass die Führungsvorrichtung mindestens zwei Führungselemente umfasst, und dass die Führungselemente als drehbar gelagerte Laufrollen ausgebildet sind.

Gegebenenfalls kann vorgesehen sein, dass die Führungsvorrichtung zwei parallel zueinander angeordnete Führungsschienen umfasst, und dass die Führungsschienen und/oder eine Einschubrichtung quer zur Längserstreckungsrichtung des langgestreckten Maschinengestells und quer zur Bewegungsrichtung der entlang dem Endlosförderer vorgesehenen Backzangen verläuft.

Gegebenenfalls kann vorgesehen sein, dass der Backofen eine zweite untere Heizelementaufnahme und gegebenenfalls mindestens eine weitere untere Heizelementaufnahme umfasst,
und dass das Heizelement über eine oder die Führungsvorrichtung wahlweise an der ersten unteren Heizelementaufnahme, an der zweiten unteren Heizelementaufnahme oder gegebenenfalls an der mindestens einen weiteren unteren Heizelementaufnahme mit dem Maschinengestell verbindbar ist.

Gegebenenfalls betrifft die Erfindung einen Backofen zum Herstellen gebackener, bevorzugt essbarer, Produkte, umfassend mehrere in einem langgestreckten Maschinengestell entlang einem Endlosförderer vorgesehene öffenbare und schließbare Backzangen, die aneinandergereiht jeweils nacheinander:
- einen Backmassenauftragsbereich zum Auftrag einer Backmasse auf eine geöffnete Backzange,
- einen Schließbereich zum Schließen der Backzangen,
- einen Backraum zum Backen der Backprodukte in den geschlossenen Backzangen, in dem mindestens eine Heizanordnung zur Beheizung der im Backraum befindlichen Backzangen vorgesehen ist,
- einen Öffenbereich zum Öffnen der Backzangen
- und einen Backproduktentnahmebereich zur Entnahme der gebackenen Produkte aus den geöffneten Backzangen durchlaufen,
wobei die Heizanordnung mindestens ein beheizbares oder beheiztes Heizelement zur Zuführung von Wärmeenergie in den Backraum umfasst.

Gegebenenfalls kann vorgesehen sein, dass der Backofen eine erste Heizelementaufnahme umfasst, an der das Heizelement über eine Führungsvorrichtung lösbar mit dem Maschinengestell verbunden ist, wobei die Führungsvorrichtung mindestens eine Führungsschiene und mindestens ein entlang der Führungsschiene bewegbares Führungselement aufweist.

Gegebenenfalls kann vorgesehen sein, dass die Führungsvorrichtung als Auszug zur geführten Einführung und Entnahme des Heizelements in den Backofen oder aus dem Backofen ist.

Gegebenenfalls kann vorgesehen sein, dass die Führungsvorrichtung zwei parallel zueinander angeordnete Führungsschienen und mindestens zwei Führungselemente umfasst, wobei die beiden Führungselemente zur geführten Einführung und Entnahme des Heizelements in den Backofen oder aus dem Backofen jeweils auf einer Führungsschiene geführt sind.

Gegebenenfalls kann vorgesehen sein, dass die Führungselemente als drehbar gelagerte Laufrollen ausgebildet sind.

Gegebenenfalls kann vorgesehen sein, dass die Führungsschienen jeweils eine erste Führungskontur aufweisen, dass das Führungselement entlang der Führungskontur geführt ist, dass die Führungskontur einen entlang der Einschubrichtung verlaufenden Einschubabschnitt zur geführten Einführung und Entnahme des Heizelements in den Backofen oder aus dem Backofen aufweist, und dass die Führungskontur einen von der Einschubrichtung abweichenden Verrastabschnitt zur Verrastung des Heizelements in dem Backofen aufweist.

Gegebenenfalls kann vorgesehen sein, dass die Führungsschienen jeweils eine erste Führungskontur und jeweils eine zweite Führungskontur aufweisen, dass zwei Führungselemente vorgesehen sind, die entlang der Führungskonturen geführt sind, dass mindestens eine der Führungskonturen einer Führungsschiene einen entlang der Einschubrichtung verlaufenden Einschubabschnitt zur geführten Einführung und Entnahme des Heizelements in den Backofen oder aus dem Backofen aufweist, und dass mindestens eine der Führungskonturen derselben Führungsschiene einen von der Einschubrichtung abweichenden Verrastabschnitt zur Verrastung des Heizelements in dem Backofen aufweist.

Gegebenenfalls kann vorgesehen sein, dass die Führungsschienen und/oder die Einschubrichtung quer zur Längserstreckungsrichtung des langgestreckten Maschinengestells und quer zur Bewegungsrichtung der entlang dem Endlosförderer vorgesehenen Backzangen verläuft.

Gegebenenfalls kann vorgesehen sein, dass der Backofen eine zweite Heizelementaufnahme und gegebenenfalls mindestens eine weitere Heizelementaufnahme umfasst, und dass das Heizelement über eine oder die Führungsvorrichtung wahlweise an der ersten Heizelementaufnahme, an der zweiten Heizelementaufnahme oder gegebenenfalls an der mindestens einen weiteren Heizelementaufnahme mit dem Maschinengestell verbindbar ist.

Gegebenenfalls kann vorgesehen sein, dass der Backraum von einem Gehäuse umgeben ist, dass das Gehäuse öffenbare und schließbare Klappen, insbesondere seitliche Türen umfasst, dass die Heizelementaufnahme im Bereich einer Klappe angeordnet ist, sodass das Heizelement durch die geöffnete Klappe in den Backraum einbringbar ist, oder dass alle Heizelementaufnahmen jeweils im Bereich einer Klappe angeordnet sind, sodass das Heizelement durch eine geöffnete Klappe wahlweise in eine der Heizelementaufnahmen des Backraums einbringbar sind.

Gegebenenfalls kann vorgesehen sein, dass die Heizanordnung mehrere Heizelemente umfasst, dass mehrere Heizelementaufnahmen vorgesehen sind, und dass die Heizelemente über Führungsvorrichtungen lösbar mit dem Maschinengestell verbunden ist.

Gegebenenfalls kann vorgesehen sein, dass der Endlosförderer entlang einer oberen Transportfläche und entlang einer vertikal von der oberen Transportfläche beabstandet angeordnete unteren Transportfläche verläuft,
und dass die Heizelementaufnahme oder die Heizelementaufnahmen zwischen der oberen Transportfläche und der unteren Transportfläche angeordnet ist oder sind.

Gegebenenfalls kann vorgesehen sein, dass das Heizelement als gasbetriebener Strahlungsbrenner ausgebildet ist, oder dass die Heizelemente als gasbetriebene Strahlungsbrenner ausgebildet sind, und insbesondere dass das Heizelement oder die Heizelemente als nach unten gerichtete gasbetriebene Strahlungsbrenner ausgebildet ist oder sind.

Gegebenenfalls kann vorgesehen sein,
- dass mindestens eine obenliegende Heizelementaufnahme vorgesehen ist, an der ein oberes Heizelement über eine Verbindungsvorrichtung lösbar mit dem Maschinengestell verbunden ist,
- dass der Backraum von dem Gehäuse umgeben ist,
- dass das Gehäuse im Bereich der obenliegenden Heizelementaufnahme eine mit einem entfernbaren Deckel verschlossene oder verschließbare Öffnung aufweist,
- und dass die Öffnung zumindest teilweise von dem oberen Heizelement abgedeckt ist.

Gegebenenfalls kann vorgesehen sein, dass die Verbindungsvorrichtung mindestens ein mit dem Maschinenrahmen verbundenes Auflager zur vertikalen Abstützung des oberen Heizelements umfasst.
Gegebenenfalls kann vorgesehen sein,
- dass das obere Heizelement am entfernbaren Deckel angebracht ist
- oder dass der entfernbare Deckel zumindest teilweise durch das obere Heizelement gebildet ist.

Der erfindungsgemäße Backofen zeichnet sich insbesondere durch mindestens ein modulares Heizelement aus. Dieses Heizelement kann einfach entnommen, zugeführt und/oder gewartet werden. Bevorzugt sind zumindest zwei Heizelemente vorgesehen, wobei ein Heizelement oberhalb des Endlosförderers vorgesehen ist und das andere Heizelement zwischen der oberen Transportfläche und der unteren Transportfläche des Endlosförderers angeordnet ist. Der Endlosförderer wird bevorzugt an einem vorderen Umlenkpunkt und einem hinteren Umlenkpunkt umgelenkt, wodurch die mit dem Endlosförderer verbundenen Backzangen bei diesen Umlenkpunkten gewendet werden.

Bevorzugt sind die Heizelemente als nach unten gerichtete Strahlungsbrenner ausgebildet. Als nach unten gerichtet wird insbesondere ein Heizelement dann bezeichnet, wenn die Wirkrichtung der Wärmeabgabe bzw. der Wärmestrahlung nach unten gerichtet ist. Bei Strahlungsbrennern wird beispielsweise die Wärmestrahlung maßgeblich oder hauptsächlich in Strahlungsrichtung, also nach unten abgegeben. Durch die beiden an unterschiedlichen Stellen angeordneten Heizelemente können nacheinander die Oberplatte und die Unterplatte der Backzange beheizt werden.

Gegebenenfalls ist vorgesehen, dass der Backofen eine Heizelementaufnahme umfasst, an der das Heizelement über eine Führungsvorrichtung lösbar mit dem Maschinengestell verbunden ist. Diese Führungsvorrichtung wirkt bevorzugt als Auszug zur geführten Einführung und Entnahme des Heizelements. Durch diese Führungsvorrichtung ist ein schnelles und unkompliziertes Einführen und Entnehmen des Heizelements ermöglicht. Eine derartige Heizelementaufnahme mit einer Führungsvorrichtung kann beispielsweise oberhalb des Endlosförderers und/oder zwischen den beiden Transportflächen des Endlosförderers angeordnet sein.

Gegebenenfalls ist im Bereich einer oben liegenden Heizelementaufnahme eine mit einem Deckel verschlossene oder verschließbare Öffnung vorgesehen, wobei diese Öffnung zumindest teilweise von einem Heizelement abgedeckt ist. Gemäß dieser Ausführungsform weist das Gehäuse des Backofens eine oben liegende Öffnung auf. In diese Öffnung kann von oben ein Heizelement eingeführt oder eingelegt werden. Insbesondere ist das Heizelement dadurch von oben zugänglich, von oben einführbar und von oben entfernbar. Das Heizelement ist dabei bevorzugt ein Teil eines Deckels, durch den die Öffnung des Backraums geschlossen werden kann. Auch diese Ausgestaltung ermöglicht eine einfache Entfernbarkeit und Wartbarkeit des Heizelements.

Gemäß einer bevorzugten Ausführungsform sind die oberen Heizelemente über eine Verbindungsvorrichtung mit dem Maschinengestell bzw. mit dem Gehäuse verbunden, sodass eine oben liegende Öffnung zumindest teilweise abgedeckt ist. Gemäß dieser Ausführungsform kann jenes Heizelement, das zwischen den beiden Transportflächen des Endlosförderers angeordnet ist, als über eine Führungsvorrichtung mit dem Maschinengestell bzw. mit dem Gehäuse verbundenes Heizelement ausgebildet sein.

Alternativ können jedoch auch alle Heizelemente über Führungsvorrichtungen mit dem Maschinengestell verbunden sein, womit auch alle Heizelemente seitlich einschiebbar oder einführbar sind.

Gemäß einer bevorzugten Ausführungsform weist der Backofen mehrere Heizelementaufnahmen auf. Als Heizelementaufnahme wird insbesondere ein Teil des Backofens bezeichnet, der zur Aufnahme oder Halterung eines Heizelements eingerichtet ist. Die Heizelementaufnahme kann beispielsweise Teile der Führungsvorrichtung oder Teile der Verbindungsvorrichtung umfassen. Gemäß einer Ausführungsform der Erfindung sind mehr Heizelementaufnahmen als Heizelemente vorgesehen, wodurch ein Heizelement wahlweise an unterschiedlichen Stellen mit dem Backofen verbunden werden kann. Dadurch kann beispielsweise die Beheizungscharakteristik des Ofens einfach verändert werden.

Darüber hinaus kann, beispielsweise zur Wartung eines bereits mit dem Ofen verbundenen Heizelements, an einer freien Heizelementaufnahme ein weiteres Heizelement mit dem Ofen verbunden, in den Ofen eingeführt oder zugeführt werden. In weiterer Folge kann das zu wartende Heizelement entfernt werden, wobei die Heizleistung des entfernten Heizelements durch das neu verbundene/eingeführte/zugeführte Heizelement ausgeglichen werden kann. Dadurch kann die Heizleistung während der Wartung aufrechterhalten bleiben, wodurch ein nahezu durchgehender Betrieb ermöglicht ist.

Bevorzugt ist das Gehäuse in allen Ausführungsformen mit einer Wärmeisolierung versehen. Bevorzugt ist das Gehäuse in allen Ausführungsformen im Wesentlichen geschlossen und insbesondere unten geschlossen ausgebildet. Bevorzugt sind auch die als Deckel ausgebildeten Elemente sowie die als Klappen ausgebildeten Elemente mit einer Wärmeisolierung versehen.
Gemäß einer weiteren Ausführungsform kann bei einer oberen Heizelementaufnahme eine Führungsvorrichtung vorgesehen sein, sodass das Heizelement geführt eingeschoben bzw. entfernt werden kann. Zur Abdeckung kann zusätzlich ein Deckel vorgesehen sein, der den Backraum des Backofens schließt. Dadurch kann in einem ersten Schritt ein Deckel entfernt werden, sodass von oben bzw. seitlich entlang einer im Wesentlichen waagrecht verlaufenden Einschubrichtung das Heizelement eingeschoben oder eingeführt werden kann. Gegebenenfalls ist durch jenen Abschnitt der Führungskontur, der zur Verrastung des Heizelements führt, eine Absenkung des Heizelements in den Backofen bzw. in den Backraum ermöglicht. In weiterer Folge kann das eingeführte Heizelement von oben mit einem Deckel abgedeckt werden, wodurch der Backofen und der Backraum geschlossen werden.

In weiterer Folge wird die Erfindung anhand einer exemplarischen Ausführungsform weiter beschrieben.
Fig. 1 zeigt eine schematische Seitenansicht bzw. Schnittansicht einer möglichen Ausgestaltung eines erfindungsgemäßen Backofens.
Fig. 2 zeigt eine schematische Darstellung einer Schnittansicht gemäß der Schnittlinie A-A aus Fig. 1.
Fig. 3 zeigt eine schematische Schrägansicht von relevanten Komponenten eines erfindungsgemäßen Backofens.

Wenn nicht anders angegeben, so entsprechen die Bezugszeichen folgenden Komponenten:
Maschinengestell 1, Endlosförderer 2, Backzange 3, Backraum 4, Heizanordnung 5, Heizelement 6, Heizelementaufnahme 7, Verbindungsvorrichtung 8, Gehäuse 9, Deckel 10, Öffnung 11, Auflager 12, Lagezentriermittel 13, erste Heizelementaufnahme 14, Führungsvorrichtung 15, Führungsschiene 16, Führungselement 17, Führungskontur 18, Einschubrichtung 19, Einschubabschnitt 20, Verrastabschnitt 21, erste Führungskontur 22, zweite Führungskontur 23, Längserstreckungsrichtung (des langgestreckten Maschinengestells) 24, zweite Heizelementaufnahme 25, weitere Heizelementaufnahme 26, Klappe 27, obere Transportfläche 28, untere Transportfläche 29, Vorkopf 30, Versorgungsschrank 31, Anschluss 32, Serviceklappe 33.

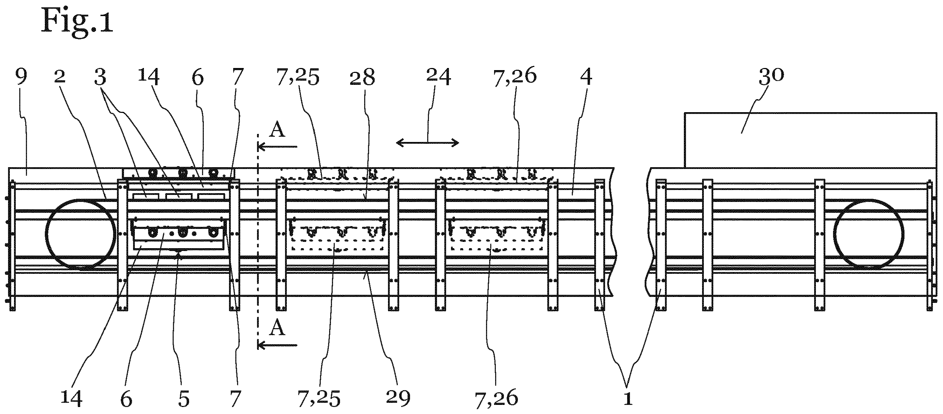

Fig. 1 zeigt eine schematische, teilweise geschnittene Seitenansicht eines erfindungsgemäßen Backofens. Der Backofen weist eine entlang der Längserstreckungsrichtung 24 verlaufende langgestreckte Form auf.

Der Backofen umfasst einen Endlosförderer 2, an dem aneinandergereiht Backzangen 3 vorgesehen sind, wobei zur Verbesserung der Darstellung nur einige wenige Backzangen dargestellt sind. Der Endlosförderer 2 erstreckt sich von einem Vorkopf 30, in dem entlang der Förderrichtung des Endlosförderers 2 bzw. der Backzangen 3 nacheinander eine Vorrichtung zum Öffnen der Backzangen 3, ein Backproduktabnahmebereich zur Entnahme der gebackenen Produkte aus den geöffneten Backzangen 3, ein Backmassenauftragsbereich zum Auftragen einer Backmasse auf eine geöffnete Backzange 3, und ein Schließbereich zum Schließen der Backzangen 3 vorgesehen sind. Diese Komponenten des Vorkopfes entsprechen dem Stand der Technik und sind daher zur Vereinfachung der Darstellung nicht dargestellt. Nach dem Schließen der Backzangen 3 verlassen die Backzangen 3 den Vorkopf 30 und treten in einen Backraum 4 ein. Dieser Backraum 4 umfasst mindestens eine Heizanordnung 5 zur Beheizung der im Backraum 4 befindlichen Backzangen 3. Die Heizanordnung 5 umfasst mindestens ein Heizelement 6, wobei gemäß der vorliegenden Ausführungsform zwei Heizelemente 6 vorgesehen sind. Der Endlosförderer 2 erstreckt sich gemäß der vorliegenden Ausführungsform entlang einer oberen Transportfläche 28 und entlang einer unteren Transportfläche 29. Gemäß der vorliegenden Ausführungsform ist ein Heizelement 6 der Heizanordnung 5 oberhalb der oberen Transportfläche 28 angeordnet. Ferner ist ein weiteres Heizelement 6 der Heizanordnung 5 zwischen der oberen Transportfläche 28 und der unteren Transportfläche 29 vorgesehen. Die beiden Heizelemente 6 sind bevorzugt als nach unten gerichtete Heizelemente ausgebildet. Bevorzugt sind die Heizelemente 6 dieser Ausführungsform als Strahlungsbrenner ausgebildet, deren Wärmestrahlung zu großen Teilen nach unten gerichtet ist.

Die Heizelemente 6 sind jeweils an einer Heizelementaufnahme 7 vorgesehen. Zusätzlich zu jenen Heizelementaufnahmen 7, an denen je ein Heizelement 6 vorgesehen ist, sind weitere Heizelementaufnahmen 7 vorgesehen, die gemäß dieser Ausführungsform frei gehalten sind. Somit sind an dem Backofen mehr Heizelementaufnahmen 7 als Heizelemente 6 vorgesehen. Dies ermöglicht beispielsweise die Änderung der Brennercharakteristik dadurch, dass ein Heizelement 6 von einer Heizelementaufnahme 7 zu einer anderen Heizelementaufnahme 7 verlagert wird. Insbesondere kann es mindestens eine zweite Heizelementaufnahme 25 bzw. eine weitere Heizelementaufnahme 26 geben.

Der Backofen umfasst gemäß der vorliegenden Ausführungsform ein Gehäuse 9. Dieses Gehäuse 9 umgibt zumindest den Backraum 4. Bevorzugt umgibt das Gehäuse 9 auch den Vorkopf 30. Das Gehäuse 9 ist bevorzugt an einem Maschinengestell 1 angebracht.

Das Gehäuse 9 ist bevorzugt im Wesentlichen geschlossen ausgebildet. Insbesondere bedeutet dies, dass das Gehäuse 9 den Backraum 4 vollständig umgibt und ihn dadurch gegenüber der Umgebung abgrenzt. Jedoch können Öffnungen im Gehäuse 9 vorhanden sein. Insbesondere ist in der Wand zwischen dem Vorkopf 30 und dem Backraum 4 zumindest eine Öffnung vorgesehen, durch die der Endlosförderer 2 hindurchgeführt ist.

Ferner umfasst der Backraum 4 bevorzugt einen nicht dargestellten Abzug zum Abzug der Brennraumgase und gegebenenfalls eine Öffnung zur Zuführung einer Konvektionsströmung. Bei dem Backofen gemäß Fig. 1 können an den unterschiedlichen Heizelementaufnahmen 7, insbesondere an der zweiten Heizelementaufnahme 25 und/oder an der weiteren Heizelementaufnahme 26 Heizelemente 6 vorgesehen werden.

Gemäß der vorliegenden Ausführungsform umfasst der Backofen mehrere Heizelementaufnahmen 7, insbesondere eine erste Heizelementaufnahme 14, eine zweite Heizelementaufnahme 25 und eine weitere Heizelementaufnahme 26. Ferner sind jeweils eine obere erste Heizelementaufnahme und eine untere erste Heizelementaufnahme, eine obere zweite Heizelementaufnahme und eine untere zweite Heizelementaufnahme, sowie eine obere weitere Heizelementaufnahme und eine untere weitere Heizelementaufnahme vorgesehen. Bevorzugt sind alle oberen Heizelementaufnahmen derart ausgebildet, dass die oberen Heizelemente deckelförmig ausgebildet sind, oder an einem deckelförmigen Körper angebracht sind. Bevorzugt sind alle unteren Heizelementaufnahmen derart ausgebildet, dass die unteren Heizelemente oder das untere Heizelement seitlich eingeschoben werden können oder kann.

Entlang des Verlaufs des Backofens, insbesondere entlang der Längserstreckungsrichtung 24, sind mehrere Heizelementaufnahmen 7 vorgesehen. Im Bereich jeder Heizelementaufnahme kann ein Deckel 10 vorgesehen sein, um ein Heizelement 6 über eine Verbindungsvorrichtung 8 mit dem Maschinengestell 1 bzw. mit dem Gehäuse 9 verbinden zu können. Diese Deckel 10 sind dabei in ihrer Erstreckung entlang der Längserstreckungsrichtung 24 begrenzt. Insbesondere weisen diese eine Größe auf, die zumindest geringfügig größer ist als der Bereich der Heizelementaufnahme 7, sodass das Heizelement 6 von oben an dem Backofen montiert werden kann. Bevorzugt weisen alle Deckel 10 dieselben Dimensionen auf, sodass eine Wahl der Positionierung erfolgen kann. Somit sind mehrere Deckel vorgesehen, wobei diese Deckel nur gegebenenfalls mit einem Heizelement versehen sind.

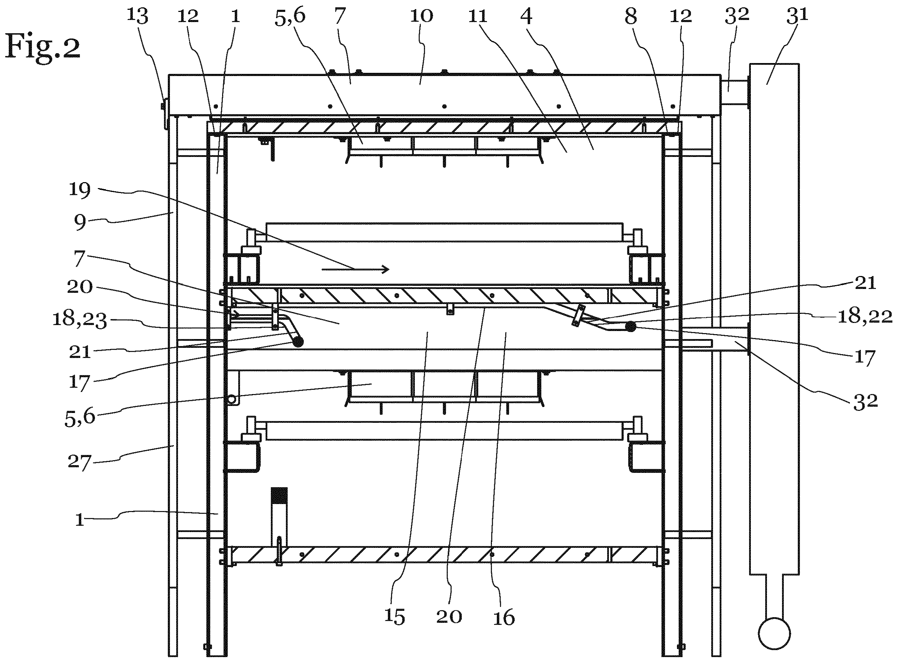

Fig. 2 zeigt eine schematische Schnittdarstellung eines Backofens gemäß der Schnittlinie A-A der Fig. 1. Die Längserstreckungsrichtung 24 des Maschinengestells 1 verläuft in der vorliegenden Ansicht der Fig. 2 projizierend.

In dem dargestellten Abschnitt des Backofens ist eine Heizanordnung 5 mit zwei Heizelementen 6 vorgesehen. Der Backraum 4 ist von einem Gehäuse 9 umgeben, wobei das Gehäuse 9 durch das Maschinengestell 1 getragen wird. Gegebenenfalls kann das Gehäuse 9 ein Teil des Maschinengestells 1 sein. Die Heizelemente 6 sind jeweils an einer Heizelementaufnahme 7 angeordnet. Das oben liegende Heizelement 6 ist über eine Verbindungsvorrichtung 8 mit dem Gehäuse 9 bzw. mit dem Maschinengestell 1 verbunden. Das Gehäuse 9 umfasst eine mit einem Deckel 10 verschließbare Öffnung 11. Diese Öffnung 11 ist zumindest teilweise durch das Heizelement 6 abgedeckt. Das Heizelement 6 ist bei der vorliegenden Ausführungsform am Deckel 10, insbesondere an der Unterseite des Deckels angeordnet, sodass das Heizelement 6 zusammen mit dem Deckel 10 die Öffnung 11 verschließt und somit den Backraum 4 von oben abdeckt. Hierzu umfasst die Verbindungsvorrichtung 8 ein Auflager 12, auf das ein Teil des Deckels 10 oder des Heizelements 6 aufgesetzt werden kann, um die Anordnung abzustützen. Darüber hinaus umfasst die Verbindungsvorrichtung 8 bevorzugt zumindest ein Lagezentriermittel 13, das eine horizontale Lagezentrierung des Heizelements 6, und insbesondere auch des Deckels 10, gegenüber dem Maschinengestell 1 bzw. dem Gehäuse 9 ermöglicht.

Beispielsweise kann dieses Lagezentriermittel 13 als Zentrierleiste ausgebildet sein, wie beispielsweise der Fig. 2 zu entnehmen ist. Jedoch können beispielsweise auch Zentrierbolzen oder andere Zentriermittel vorgesehen sein.

Bei der vorliegenden Ausführungsform ist das obere Heizelement 6 insbesondere als deckelförmiger Körper ausgebildet.

Ferner umfasst der Backofen ein unteres Heizelement 6, das über eine Führungsvorrichtung 15 mit dem Maschinengestell 1 verbunden ist. Die Führungsvorrichtung 15 umfasst eine Führungsschiene 16, sowie mindestens ein, bevorzugt mehrere, Führungselemente 17. In der vorliegenden Ausführungsform sind vier Führungselemente 17 vorgesehen, wobei in der Darstellung nur zwei Führungselemente 17 zu sehen sind. Die Führungsschiene 16 umfasst in der vorliegenden Ausführungsform zwei Führungskonturen 18. Die Führungsschiene 16 verläuft im Wesentlichen entlang der Einschubrichtung 19. Die Führungskontur 18 umfasst einen der Einschubrichtung 19 folgenden Einschubabschnitt 20. Darüber hinaus umfasst die Führungskontur 18 einen von der Einschubrichtung 19 abweichenden Verrastabschnitt 21.

In der vorliegenden Ausführungsform sind eine erste Führungskontur 22 und eine zweite Führungskontur 23 vorgesehen. Die beiden Führungskonturen 22, 23 dienen insbesondere der Führung unterschiedlicher Führungselemente 17. Bevorzugt ist, wie auch bei dieser Ausführungsform, beidseitig des Heizelements 6 je eine Führungsschiene 16 vorgesehen. Die Führungsschienen 16 können insbesondere symmetrisch ausgebildet sein.

Die Führungselemente 17 sind bevorzugt als Rollen und insbesondere als drehbar gelagerte Rollen ausgebildet. Dadurch kann die Reibung zwischen der Führungsschiene 16, insbesondere der Führungskontur 18, und dem Führungselement 17, verringert werden. Die Führungselemente ragen bevorzugt beidseitig eines Heizelements ab.

Die verwendeten Heizelemente 6 können ein Gewicht von mehreren Kilogramm aufweisen. Insbesondere durch die Beheizung kann es auch zu Wärmespannungen und zu einer Verspannung des Heizelements in den Führungsschienen 16 kommen. Durch das Vorsehen gelagerter Rollen wird das Einschieben und das Entfernen der Heizelemente 6 erleichtert.

Das Einführen und das Entnehmen des unteren Heizelements 6 kann durch eine Klappe 27 erfolgen, die beispielsweise als seitliche Ofentüre ausgebildet ist.

Ferner kann der erfindungsgemäße Backofen einen Versorgungsschrank 31 aufweisen. Dieser Versorgungsschrank 31 ist lediglich schematisch dargestellt und kann beispielsweise Anschlüsse zur Zuführung des Brennstoffs und des Primärsauerstoffs bzw. der Primärluft umfassen. Bevorzugt ist der Versorgungsschrank 31 als verfahrbarer Versorgungsschrank ausgebildet und/oder so aufgebaut, dass er mit einem Transportwagen oder Kran leicht zu der jeweilig belegten Heizelementaufnahme 7 gefahren und/oder transportiert werden kann, um die Heizelemente 6 mit dem Versorgungsschrank 31 zu verbinden. Beispielsweise weisen die Heizelemente 6 Anschlüsse 32 zur Zuleitung des Brenngemischs auf, die beispielsweise, wie bei der vorliegenden Ausführungsform des unteren Heizelements, durch das Gehäuse 9 hindurchragen, um an der Außenseite des Gehäuses 9 mit dem Versorgungsschrank 31 verbunden werden zu können. Der Versorgungsschrank 31 ist seinerseits mit einer Brennstoffleitung verbunden, um den Brennstoff in die Heizelemente 6 leiten zu können. Ferner sind auch Zünd- und Überwachungselektroden zwischen dem Heiz- und Versorgungsschrank verlegt und/oder vorgesehen. Diese Zünd- und Überwachungselektroden sind schnell werkzeuglos zu lösen und wieder zu verbinden.

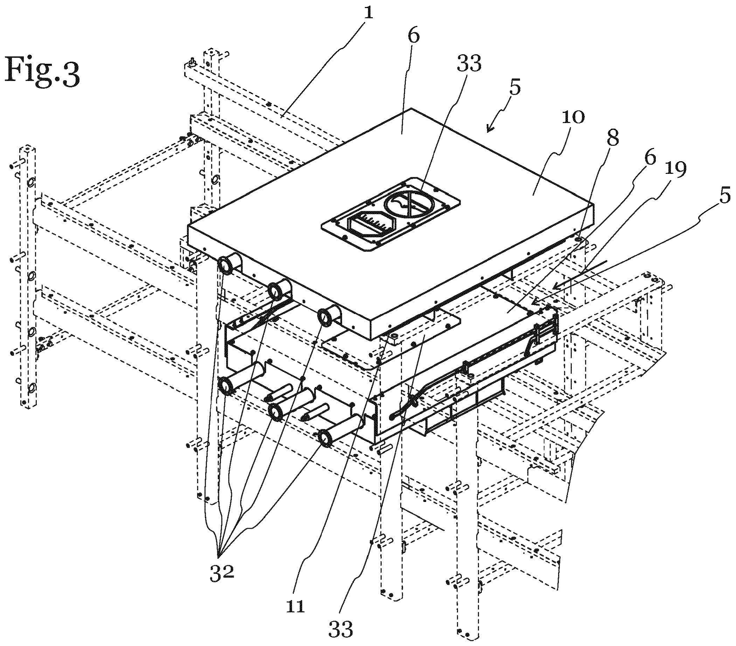

Fig. 3 zeigt eine Schrägansicht von Teilen des Backofens der Figuren 1 und 2, wobei bis auf die maßgeblichen Komponenten der Heizanordnung 5 bzw. der Verbindungsvorrichtung 8 und der Führungsvorrichtung 15 alle weiteren Komponenten ausgeblendet sind. Die Heizelemente 6 sind wiederum über die Verbindungsvorrichtung 8 bzw. über die Führungsvorrichtung 15 mit dem Maschinengestell 1 verbunden. Die Heizelemente 6 weisen Anschlüsse 32 zur Verbindung mit dem nicht dargestellten Versorgungsschrank 31 auf. Während das untere Heizelement 6 entlang der Einschubrichtung 19 in den Backofen eingebracht und gegen die Einschubrichtung 19 aus dem Backofen entfernt werden kann, wird bei der vorliegenden Ausführungsform das oben liegende Heizelement 6 von oben deckelförmig auf das Maschinengestell 1 aufgelegt, um insbesondere die Öffnung 11 des Gehäuses 9 (nicht dargestellt) abzudecken. Dazu ist das Heizelement 6 fest mit einem Deckel 10 verbunden.

Auf den Rückseiten der Heizelemente 6 ist jeweils eine Serviceklappe 33 vorgesehen. Diese Serviceklappe 33 ermöglicht die Überprüfung und Wartung von Komponenten des Heizelements, beispielsweise eine Wartung der Zündvorrichtung, ohne das gesamte Heizelement 6 demontieren zu müssen.

Gemäß einer bevorzugten Ausführungsform ist vorgesehen, dass die Führungselemente 17, insbesondere dass vier Führungselemente 17 am Heizelement 6 vorgesehen sind. Gemäß dieser Ausführungsform ist bevorzugt vorgesehen, dass die Führungsschienen 16 am Maschinengestell 1 angeordnet sind. Dadurch kann das Heizelement 6 durch eine Führung der Führungselemente 17 an den Führungsschienen 16 in den Backofen eingeführt oder aus dem Backofen geführt entnommen werden. Die Führungselemente 17 sind dabei als im Wesentlichen quer zur Einschubrichtung 19 auskragende Führungselemente 17 ausgebildet, die insbesondere drehbar gelagerte Rollen umfassen. Die Drehachse dieser Rollen verläuft ebenfalls bevorzugt quer zur Einschubrichtung 19.

Grundsätzlich entspricht es jedoch auch dem Erfindungsgedanken, dass die Führungselemente 17 am Maschinengestell 1 und die Führungsschienen 16 am Heizelement 6 vorgesehen sind.

## Patentansprüche

1. Backofen zum Herstellen gebackener, bevorzugt essbarer, Produkte, umfassend ein langgestrecktes Maschinengestell (1) mit mehreren entlang einem Endlosförderer (2) vorgesehenen öffenbaren und schließbaren Backzangen (3), die aneinandergereiht jeweils nacheinander:
- einen Backmassenauftragsbereich zum Auftrag einer Backmasse auf eine geöffnete Backzange (3),
- einen Schließbereich zum Schließen der Backzangen (3),
- einen Backraum (4) zum Backen der Backprodukte in den geschlossenen Backzangen (3), in dem mindestens eine Heizanordnung (5) zur Beheizung der im Backraum (4) befindlichen Backzangen (3) vorgesehen ist,
- einen Öffenbereich zum Öffnen der Backzangen (3)
- und einen Backproduktentnahmebereich zur Entnahme der gebackenen Produkte aus den geöffneten Backzangen (3) durchlaufen, wobei die Heizanordnung (5) mindestens ein beheizbares oder beheiztes Heizelement (6) zur Zuführung von Wärmeenergie in den Backraum (4) umfasst, wobei mindestens eine obenliegende Heizelementaufnahme (7) vorgesehen ist, an der das Heizelement (6) über eine Verbindungsvorrichtung (8) lösbar mit dem Maschinengestell (1) verbunden ist und wobei der Backraum (4) von einem Gehäuse (9) umgeben ist, **dadurch gekennzeichnet,**
- **dass** das Gehäuse (9) im Bereich der obenliegenden Heizelementaufnahme (7) eine mit einem entfernbaren Deckel (10) verschlossene Öffnung (11) aufweist,
- und **dass** die Öffnung (11) zumindest teilweise von dem Heizelement (6) abgedeckt ist.

2. Backofen nach Anspruch 1, **dadurch gekennzeichnet, dass** die Verbindungsvorrichtung (8) mindestens ein mit dem Maschinenrahmen verbundenes Auflager (12) zur vertikalen Abstützung des Heizelements (6) umfasst.

3. Backofen nach Anspruch 1 oder 2, **dadurch gekennzeichnet, dass** die Verbindungsvorrichtung (8) mindestens ein Lagezentriermittel (13) zur horizontalen Lagezentrierung des Heizelements (6) gegenüber dem Maschinengestell (1) umfasst.

4. Backofen nach einem der Ansprüche 1 bis 3, **dadurch gekennzeichnet,**
- **dass** das Heizelement (6) am entfernbaren Deckel (10) angebracht ist
- oder dass der entfernbare Deckel (10) zumindest teilweise durch das Heizelement (6) gebildet ist.

5. Backofen nach einem der Ansprüche 1 bis 4, **dadurch gekennzeichnet,**
- **dass** das Heizelement (6) am entfernbaren Deckel (10) angebracht ist
- oder dass der entfernbare Deckel (10) zumindest teilweise durch das Heizelement (6) gebildet ist,
und **dass** der Deckel (10) über die Verbindungsvorrichtung (8) mit dem Maschinengestell (1) und/oder dem Gehäuse (9) lösbar verbunden ist.

6. Backofen nach einem der Ansprüche 1 bis 5, **dadurch gekennzeichnet,**
- **dass** mehrere obenliegende Heizelementaufnahmen (7) vorgesehen sind,
- **dass** das Gehäuse (9) im Bereich der obenliegenden Heizelementaufnahmen (7) eine oder mehrere mit einem entfernbaren Deckel (10) oder mit mehreren entfernbaren Deckeln (10) verschlossene oder verschließbare Öffnung (11) oder Öffnungen (11) aufweist,
- und **dass** das Heizelement (6) wahlweise über die Verbindungsvorrichtung (8) an einer der obenliegenden Heizelementaufnahmen (7) mit dem Maschinengestell (1) verbunden oder verbindbar ist.

7. Backofen nach einem der Ansprüche 1 bis 6, **dadurch gekennzeichnet,**
- **dass** die Heizanordnung (5) mehrere Heizelemente (6) umfasst,
- **dass** mehrere Heizelementaufnahmen (7, 14, 25, 26) vorgesehen sind,
- und **dass** die Heizelemente (6) über Verbindungsvorrichtungen (8) lösbar mit dem Maschinengestell (1) verbunden sind.

8. Backofen nach einem der Ansprüche 1 bis 7, **dadurch gekennzeichnet, dass** die obere Heizelementaufnahme (7) oder die oberen Heizelementaufnahmen (7) oberhalb des Endlosförderers (2) angeordnet ist oder sind.

9. Backofen nach einem der Ansprüche 1 bis 8, **dadurch gekennzeichnet, dass** der Backofen eine zweite Heizelementaufnahme (25) und gegebenenfalls mindestens eine weitere Heizelementaufnahme (26) umfasst,
und dass das Heizelement (6) über eine oder die Verbindungsvorrichtung (15) wahlweise an der ersten Heizelementaufnahme (14), an der zweiten Heizelementaufnahme (25) oder gegebenenfalls an der mindestens einen weiteren Heizelementaufnahme (26) mit dem Maschinengestell (1) verbindbar ist.

10. Backofen nach einem der Ansprüche 1 bis 9, **dadurch gekennzeichnet,**
- **dass** das Heizelement (6) als gasbetriebener Strahlungsbrenner ausgebildet ist,
- oder dass die Heizelemente (6) als gasbetriebene Strahlungsbrenner ausgebildet sind,
- und insbesondere dass das Heizelement (6) oder die Heizelemente (6) als nach unten gerichtete gasbetriebene Strahlungsbrenner ausgebildet ist oder sind.

11. Backofen nach einem der Ansprüche 1 bis 10, **dadurch gekennzeichnet, dass** der Backofen eine erste untere Heizelementaufnahme (14) umfasst, an der ein unteres Heizelement (6) über eine Führungsvorrichtung (15) lösbar mit dem Maschinengestell (1) verbunden ist, wobei die Führungsvorrichtung (15) mindestens eine Führungsschiene (16) und mindestens ein entlang der Führungsschiene (16) bewegbares Führungselement (17) aufweist.

12. Backofen nach Anspruch 11, **dadurch gekennzeichnet, dass** die Führungsvorrichtung (15) als Auszug zur geführten Einführung und Entnahme des unteren Heizelements (6) in den Backofen oder aus dem Backofen ist.

13. Backofen nach Anspruch 11 oder 12, **dadurch gekennzeichnet, dass** die Führungsvorrichtung mindestens zwei Führungselemente (17) umfasst, und dass die Führungselemente (17) als drehbar gelagerte Laufrollen ausgebildet sind.

14. Backofen nach einem der Ansprüche 11 bis 13, **dadurch gekennzeichnet, dass** die Führungsvorrichtung (15) zwei parallel zueinander angeordnete Führungsschienen (16) umfasst, und dass die Führungsschienen (16) und/oder eine Einschubrichtung (19) quer zur Längserstreckungsrichtung (24) des langgestreckten Maschinengestells (1) und quer zur Bewegungsrichtung der entlang dem Endlosförderer (2) vorgesehenen Backzangen (3) verläuft.

15. Backofen nach einem der Ansprüche 1 bis 14, **dadurch gekennzeichnet, dass** der Backofen eine zweite untere Heizelementaufnahme (25) und gegebenenfalls mindestens eine weitere untere Heizelementaufnahme (26) umfasst,
und dass das Heizelement (6) über eine oder die Führungsvorrichtung (15) wahlweise an der ersten unteren Heizelementaufnahme (14), an der zweiten unteren Heizelementaufnahme (25) oder gegebenenfalls an der mindestens einen weiteren unteren Heizelementaufnahme (26) mit dem Maschinengestell (1) verbindbar ist.

## Claims

1. A baking oven for producing baked, preferably edible, products, comprising an elongated machine frame (1) with a plurality of baking tongs (3), which are provided along an endless conveyor (2), can be opened and closed, are arranged in series and one after the other proceed through:
- a baking mass application area for applying a baking mass to an opened baking tong (3),
- a closing area for closing the baking tongs (3),
- a baking chamber (4) for baking the baked products in the closed baking tongs (3), in which at least one heating arrangement (5) is provided for heating the baking tongs (3) located inside the baking chamber (4),
- an opening area for opening the baking tongs (3)
- and a baked product removal area for removing the baked products from the opened baking tongs (3),
wherein the heating arrangement (5) comprises at least one heatable or heated heating element (6) for supplying thermal energy to the baking chamber (4),
wherein at least one upper heating element accommodation (7) is provided, on which the heating element (6) is releasably connected to the machine frame (1) via a connection device (8), and
wherein the baking chamber (4) is surrounded by a housing (9),
**characterized**
- **in that** the housing (9) has an opening (11) in the area of the upper heating element accommodation (7), which is closed by means of a removable lid (10),
- and **in that** the opening (11) is at least partly covered by the heating element (6).

2. The baking oven according to claim 1, **characterized in that** the connection device (8) comprises at least one support (12), which is connected to the machine frame for vertically supporting the heating element (6).

3. The baking oven according to claim 1 or 2, **characterized in that** the connection device (8) comprises at least one position centring means (13) for centring the position of the heating element (6) horizontally in relation to the machine frame (1).

4. The baking oven according to one of claims 1 to 3, **characterized**
- **in that** the heating element (6) is arranged on the removable lid (10)
- or in that the removable lid (10) is at least partly formed by the heating element (6).

5. The baking oven according to one of claims 1 to 4, **characterized**
- **in that** the heating element (6) is arranged on the removable lid (10)
- or in that the removable lid (10) is at least partly formed by the heating element (6), and in that the lid (10) is releasably connected to the machine frame (1) and/or the housing (9) via the connection device (8).

6. The baking oven according to one of claims 1 to 5, **characterized**
- **in that** a plurality of upper heating element accommodations (7) is provided,
- **in that** the housing (9) has one opening (11) or a plurality of openings (11) in the area of the upper heating element accommodations (7), which is/are closed or can be closed by means of one removable lid (10) or a plurality of removable lids (10),
- and **in that** the heating element (6) is optionally connected or connectable to the machine frame (1) on one of the upper heating element accommodations (7) via the connection device (8).

7. The baking oven according to one of claims 1 to 6, **characterized**
- **in that** the heating arrangement (5) comprises a plurality of heating elements (6),
- **in that** a plurality of heating element accommodations (7, 14, 25, 26) is provided,
- and **in that** the heating elements (6) are releasably connected to the machine frame (1) via connection devices (8).

8. The baking oven according to one of claims 1 to 7, **characterized in that** the upper heating element accommodation (7) or the upper heating element accommodations (7) is or are arranged above the endless conveyor (2).

9. The baking oven according to one of claims 1 to 8, **characterized in that** the baking oven comprises a second heating element accommodation (25) and optionally at least one additional heating element accommodation (26),
and **in that** the heating element (6) is connectable to the machine frame (1), either on the first heating element accommodation (14), on the second heating element accommodation (25) or optionally on the at least one additional heating element accommodation (26), via a or the connection device (15).

10. The baking oven according to one of claims 1 to 9, **characterized**
- **in that** the heating element (6) is configured as gas-powered radiant burner,
- or in that the heating elements (6) are configured as gas-powered radiant burners,
- and in particular in that the heating element (6) or the heating elements (6) is or are configured as downwardly directed gas-powered radiant burner/s.

11. The baking oven according to one of claims 1 to 10, **characterized in that** the baking oven comprises a first lower heating element accommodation (14), on which a lower heating element (6) is releasably connected to the machine frame (1) via a guiding device (15), wherein the guiding device (15) has at least one guiding rail (16) and at least one guiding element (17), which is movable along the guiding rail (16).

12. The baking oven according to claim 11, **characterized in that** the guiding device (15) is configured as drawer for the guided insertion and removal of the lower heating element (6) into the baking oven or from the baking oven.

13. The baking oven according to claim 11 or 12, **characterized in that** the guiding device comprises at least two guiding elements (17), and **in that** the guiding elements (17) are configured as rotatably mounted rollers.

14. The baking oven according to one of claims 11 to 13, **characterized in that** the guiding device (15) comprises two guiding rails (16), which are parallel to one another, and **in that** the guiding rails (16) and/or an insertion direction (19) is/are transversal to the direction of longitudinal extension (24) of the elongated machine frame (1) and transversal to the direction of movement of the baking tongs (3), which are provided along the endless conveyor (2).

15. The baking oven according to one of claims 1 to 14, **characterized in that** the baking oven comprises a second lower heating element accommodation (25) and optionally at least one additional lower heating element accommodation (26),
and **in that** the heating element (6) is connectable to the machine frame (1), either on the first lower heating element accommodation (14), on the second lower heating element accommodation (25) or optionally on the at least one additional lower heating element accommodation (26), via a or the guiding device (15).

## Revendications

1. Un four pour la production de produits cuits, de préférence comestibles, comprenant un bâti de machine (1) allongé avec une pluralité de pinces de cuisson (3) pouvant être ouvertes et fermées, qui sont prévues le long d'un transporteur sans fin (2) et qui passent de manière alignée les unes derrière les autres par :
- une zone d'application de masse à cuire pour appliquer une masse à cuire sur une pince de cuisson (3) ouverte,
- une zone de fermeture pour fermer les pinces de cuisson (3),
- une chambre de cuisson (4) pour cuire les produits cuits dans les pinces de cuisson (3) fermées, dans laquelle est prévu au moins un dispositif de chauffage (5) pour chauffer les pinces de cuisson (3) se trouvant dans la chambre de cuisson (4),
- une zone d'ouverture pour ouvrir les pinces de cuisson (3),
- et une zone de retrait des produits cuits pour enlever les produits cuits des pinces de cuisson (3) ouvertes,
dans lequel le dispositif de chauffage (5) comprend au moins un élément de chauffage (6) chauffable ou chauffé pour fournir de l'énergie thermique à la chambre de cuisson (4), dans lequel il est prévu au moins un logement d'élément de chauffage (7) supérieur, où l'élément de chauffage (6) est relié de manière amovible au bâti de machine (1) par un dispositif de liaison (8), et
dans lequel la chambre de cuisson (4) est entourée par un boîtier (9),
**caractérisé**
- **en ce que** le boîtier (9) présente, dans la région du logement d'élément de chauffage (7) supérieur, une ouverture (11) qui est fermée par un couvercle (10) détachable
- et **en ce que** l'ouverture (11) est au moins partiellement couverte par l'élément de chauffage (6).

2. Le four selon la revendication 1, **caractérisé en ce que** le dispositif de liaison (8) comprend au moins un support (12) relié au bâti de machine pour le support vertical de l'élément de chauffage (6).

3. Le four selon la revendication 1 ou 2, **caractérisé en ce que** le dispositif de liaison (8) comprend au moins un moyen de centrage de position (13) pour le centrage horizontale de la position de l'élément de chauffage (6) par rapport au bâti de machine (1).

4. Le four selon l'une des revendications 1 à 3, **caractérisé**
- **en ce que** l'élément de chauffage (6) est monté sur le couvercle (10) détachable,
- ou en ce que le couvercle (10) détachable est au moins partiellement formé par l'élément de chauffage (6).

5. Le four selon l'une des revendications 1 à 4, **caractérisé**
- **en ce que** l'élément de chauffage (6) est monté sur le couvercle (10) détachable,
- ou en ce que le couvercle (10) détachable est au moins partiellement formé par l'élément de chauffage (6),
- et **en ce que** le couvercle (10) est relié de manière amovible au bâti de machine (1) et/ou au boîtier (9) par le dispositif de liaison (8).

6. Le four selon l'une des revendications 1 à 5, **caractérisé**
- **en ce que** plusieurs logements d'élément de chauffage (7) supérieurs sont prévus,
- **en ce que** le boîtier (9) présente, dans la région des logements d'élément de chauffage (7) supérieurs, une ouverture (11) ou plusieurs ouvertures (11) qui est/sont fermée/s ou peut/peuvent être fermée/s par un couvercle (10) détachable ou plusieurs couvercles (10) détachables,
- et **en ce que** l'élément de chauffage (6) est relié ou peut être relié au choix au bâti de machine (1) par le dispositif de liaison (8) sur un des logements d'élément de chauffage (7) supérieurs.

7. Le four selon l'une des revendications 1 à 6, **caractérisé**
- **en ce que** le dispositif de chauffage (5) comprend plusieurs éléments de chauffage (6),
- **en ce que** plusieurs logements d'élément de chauffage (7, 14, 25, 26) sont prévus,
- et **en ce que** les éléments de chauffage (6) sont reliés de manière amovible au bâti de machine (1) par des dispositifs de liaison (8).

8. Le four selon l'une des revendications 1 à 7, **caractérisé en ce que** le logement d'élément de chauffage (7) supérieur ou les logements d'élément de chauffage (7) supérieurs est ou sont disposé/s au-dessus du transporteur sans fin (2).

9. Le four selon l'une des revendications 1 à 8, **caractérisé en ce que** le four comprend un deuxième logement d'élément de chauffage (25) et éventuellement au moins un autre logement d'élément de chauffage (26),
et **en ce que** l'élément de chauffage (6) peut être relié au bâti de machine (1) au choix sur le premier logement d'élément de chauffage (14), sur le deuxième logement d'élément de chauffage (25) ou éventuellement sur le au moins un autre logement d'élément de chauffage (26) par un ou le dispositif de liaison (15).

10. Le four selon l'une des revendications 1 à 9, **caractérisé**
- **en ce que** l'élément de chauffage (6) est réalisé comme un brûleur radiant alimenté au gaz,
- ou en ce que les éléments de chauffage (6) sont réalisés comme des brûleurs radiants alimentés au gaz,
- et en particulier en ce que l'élément de chauffage (6) ou les éléments de chauffage (6) est ou sont réalisé/s comme des brûleurs radiants alimentés à gaz dirigé/s vers le bas.

11. Le four selon l'une des revendications 1 à 10, **caractérisé en ce que** le four comprend un premier logement d'élément de chauffage (14) inférieur, où un élément de chauffage (6) inférieur est relié de manière amovible au bâti de machine (1) par un dispositif de guidage (15), le dispositif de guidage (15) présentant au moins un rail de guidage (16) et au moins un élément de guidage (17) mobile selon le rail de guidage (16).

12. Le four selon la revendication 11, **caractérisé en ce que** le dispositif de guidage (15) est réalisé comme un coulisseau pour l'insertion et le retrait guidés de l'élément de chauffage (6) inférieur dans le ou hors du four.

13. Le four selon la revendication 11 ou 12, **caractérisé en ce que** le dispositif de guidage comprend au moins deux éléments de guidage (17) et **en ce que** les éléments de guidage (17) sont réalisés comme des galets montés en rotation.

14. Le four selon l'une des revendications 11 à 13, **caractérisé en ce que** le dispositif de guidage (15) comprend deux rails de guidage (16) disposés parallèlement l'un à l'autre et **en ce que** les rails de guidage (16) et/ou une direction d'insertion (19) s'étend/ent transversalement par rapport à la direction d'allongement (24) du bâti de machine (1) allongé ou transversalement par rapport à la direction de déplacement des pinces de cuisson (3) prévues le long du transporteur sans fin (2).

15. Le four selon l'une des revendications 1 à 14, **caractérisé en ce que** le four comprend un deuxième logement d'élément de chauffage (25) inférieur et éventuellement au moins un autre logement d'élément de chauffage (26) inférieur,
et **en ce que** l'élément de chauffage (6) peut être relié au bâti de machine (1) au choix sur le premier logement d'élément de chauffage (14) inférieur, sur le deuxième logement d'élément de chauffage (25) inférieur ou éventuellement sur le au moins un autre logement d'élément de chauffage (26) inférieur par un ou le dispositif de guidage (15).
